# FASCICULE DE BREVET EUROPEEN

(11) **EP 3 160 252 B1**
(45) Date de publication et mention de la délivrance du brevet: **08.01.2020**
(21) Numéro de dépôt: 15733433.5
(22) Date de dépôt: 30.06.2015
(51) Int. Cl.: A23L 29/212, A23L 29/30, A23G 3/48, A23G 4/06, A23G 4/10, A23G 3/42

(54) **NOUVELLE CONFISERIE SANS MATIERE GRASSE**
NEUARTIGER FETTFREIER KONFEKTARTIKEL
NOVEL FAT-FREE CONFECTIONERY ITEM

(30) Priorité: 30.06.2014 FR 1456221
(43) Date de publication de la demande: 03.05.2017
(73) Titulaire: Roquette Frères, 62136 Lestrem (FR)
(72) Inventeur: BRENDEL, Raymond, F-62400 Bethune (FR); BUSOLIN, André, F-01210 Ornex (FR)
(74) Mandataire: Plasseraud IP
(86) Numéro de dépôt international: PCT/EP2015/064781
(87) Numéro de publication internationale: WO 2016/001191

(56) Documents cités:
- EP-A1- 0 954 982
- EP-A1- 1 245 579
- EP-A1- 1 245 580
- EP-A1- 1 245 581
- EP-A2- 0 561 088
- WO-A1-92/21703
- WO-A1-94/05163
- WO-A1-2004/068964
- WO-A2-00/22939
- FR-A1- 2 444 080
- FR-A1- 2 445 839
- FR-A1- 2 997 818
- US-A- 4 508 713
- US-A1- 2006 013 779
- US-B1- 6 780 990

## Description

### DOMAINE DE L'INVENTION

La présente invention concerne une nouvelle confiserie, plus particulièrement une pâte à mâcher dont la teneur en matière grasse a été réduite voire totalement supprimée. Cette réduction voire suppression de la matière grasse permet l'obtention d'une confiserie qui présente une charge calorique réduite, tout en conservant une texture similaire à la même confiserie contenant de la matière grasse. Qui plus est, l'invention concerne également l'association de cette nouvelle confiserie avec des confiseries déjà existantes afin de créer de nouvelles textures et saveurs.

La présente invention concerne également un procédé de préparation d'une telle confiserie.

### ARRIERE-PLAN TECHNOLOGIQUE

WO2004/068964 décrit une tablette de gomme à mâcher comprenant au moins deux modules séparés adhérant l'un à l'autre. Il décrit aussi que lorsque l'on souhaite une gomme à faible teneur en calories, un agent de charge à faible calories peut etre utilisé, tel que polydextrose, le raftilose, le raftilin, l'inuline, les fructooligosaccharides (Nutraflora®, le palatinose oligosaccharidé, les hydrolysates de gomme guar (Sun fiber®, ou les dextrines indigestibles (Fibersol®).

EP1245579 décrit une pâte à mâcher comprenant une maltodextrine branchée (qui est un hydrolysat d'amidon fibreux).

US2006/0013779 décrit une composition orale pour rafraîchir la bouche qui comprend un extrait d'écorce de magnolia en combinaison avec un tensioactif. Il aussi décrit que l'on souhaite une gomme à faible teneur en calories, un agent de charge à faible calories peut être utilisé, tel que le dextrose, le raftilose, le raftilin, l'inuline, les fructooligosaccharides (Nutraflora®, le palatinose oligosaccharidé, les hydrolysates de gomme guar (Sun fiber®, ou les dextrines indigestibles (Fibersol®).

Les produits de confiserie sont nombreux. Ils ont tous en commun la cuisson du sucre et/ ou de polyols et leur mélange avec d'autres ingrédients pour obtenir des spécialités et des parfums différents. Les confiseries sont notamment constituées de sucres ou polyols, d'agents édulcorants, de matière grasse, d'agents émulsifiants, d'arômes, de colorants, d'acides et/ou de bases minérales et/ou organiques et leurs sels et d'un ou plusieurs hydrocolloïdes épaississants et/ou gélifiants d'origine végétale ou animale tels que la gomme arabique, la gélatine, la pectine, les carraghénanes, les alginates, les celluloses et l'amidon et ses dérivés.

Les pâtes à mâcher peuvent être obtenues par cuisson d'un mélange de sucre et de sirop de glucose auxquels a été ajoutée de la matière grasse. Traditionnellement, les pâtes à mâcher classiques contiennent entre 4 et 8%, parfois 10% de matière grasse. La masse cuite peut être ensuite aérée pour l'alléger par l'un des procédés bien connu des confiseurs comme par exemple l'étirage, le battage pouvant être sous pression, le mixage sous pression, l'extrusion. C'est cette aération et la présence de matières grasses qui donnent aux pâtes à mâcher leur texture caractéristique.

La présente invention concerne toutes les confiseries de type pâte à mâcher qui contiennent traditionnellement de la matière grasse.

La matière grasse utilisée dans les confiseries peut être de différente origine. Le plus souvent il s'agit d'huile de palme hydrogénée. Dans certains cas, il peut également s'agir d'huile de coprah.

L'huile de palme est aujourd'hui très utilisée dans l'industrie agroalimentaire (80% des applications sont concernées). Son très faible coût de production, sa capacité à conserver les aliments et à les rendre moelleux font de ce produit l'élément phare des industriels.

En effet, la composition du contenu de notre assiette s'est profondément modifiée. D'aliments entiers naturels cuisinés à la maison, notre régime alimentaire s'est mis à inclure de plus en plus d'aliments transformés par l'industrie agro-alimentaire. Dans les pays développés, cette transformation s'est accompagnée d'une augmentation de l'apport en acides gras, ceux-ci étant passés de 25 % à 45 % de nos apports énergétiques. Or, cette augmentation s'est faite au détriment des acides gras insaturés cis et au profit des graisses saturées et trans, dont les effets délétères sur notre santé sont nombreux.

Parmi ceux-ci, on peut citer les maladies cardiovasculaires, l'obésité, le diabète, mais aussi, chose assez surprenante, la dépression.

Pour les industries agroalimentaires, la matière grasse alimentaire idéale doit avoir une consistance solide à température ambiante, ce qui confère une meilleure tenue aux aliments. C'est pourquoi les huiles végétales raffinées, qui sont liquides à température ambiante car elles contiennent une proportion suffisante d'acides gras insaturés, ont été écartées au profit de margarines riches en acides gras saturés.

La matière grasse idéale doit également contribuer à une bonne conservation de l'aliment en l'empêchant de prendre une odeur âcre et un goût désagréable au contact de l'air. Ce qui a lieu avec le rancissement provoqué par la peroxydation des acides gras insaturés. Il faut donc remplacer les « bons » acides gras insaturés contenus dans les huiles végétales raffinées, dont l'huile de palme, par des acides gras saturés. Leur point de fusion ne doit par contre pas être trop élevé, sinon ils donneront un goût cireux au produit fini.

Par ailleurs, la matière grasse alimentaire idéale doit donner la sensation d'une texture moelleuse et des saveurs alléchantes. Dans les pâtisseries, on favorise ainsi la sensation de fondant dans la bouche. Enfin, pour éviter qu'elle ne libère des composés potentiellement cancérigènes, il faut s'assurer que cette matière grasse ne se dégrade pas rapidement aux températures de cuisson, et qu'elle ne possède aucun caractère allergisant. Ces caractéristiques doivent de préférence être obtenues avec un faible coût de production, afin de ne pas alourdir les dépenses des consommateurs. Voilà en quelques mots le cahier des charges de l'industrie alimentaire, qui a développé diverses techniques de traitement des huiles, et notamment de l'huile de palme, afin d'obtenir les qualités sus-mentionnées.

L'huile de palme devrait plutôt porter le nom de « graisse de palme » car elle est dure à température ambiante à cause de sa richesse en acides gras saturés (qui est bien supérieure à celle des graisses animales comme le beurre, par exemple).

On en trouve dans une grande diversité de produits tels que les biscuits, confiseries, pains industriels, barres chocolatées, céréales, margarine, crème glacée etc. (mais aussi dans certains savons, parfums, cosmétiques...).

Comme les acides gras trans, les acides gras saturés font également augmenter le mauvais cholestérol. Ainsi rajouter de la matière grasse riche en acides gras saturés (ici huile de palme) dans une alimentation déjà très riche en acides gras saturés est mauvais pour la santé.

Qui plus est, la production d'huile de palme est associée à une déforestation massive, émissions de gaz à effet de serre et impact négatif sur la biodiversité.

Depuis peu, une inversion de tendance est à constater. Pour lutter contre ces méfaits écologiques et sanitaires, plusieurs grandes enseignes (fast-foods, grandes surfaces, entreprises agro-alimentaires...) ont choisi de réduire sensiblement l'utilisation de l'huile de palme dans la production de leurs denrées alimentaires, voire de la supprimer définitivement.

C'est dans cette optique que se positionne la présente invention puisqu'elle permet de diminuer, voire totalement supprimer la matière grasse dans les confiseries, et plus particulièrement les confiseries de type pâte à mâcher.

Il existait donc un besoin de remplacer totalement ou partiellement la matière grasse dans les confiseries, tout en conférant aux confiseries les qualités recherchées qui sont : un aspect visuel satisfaisant, une absence de caractère collant soit en bouche soit dans l'emballage final, une texture en bouche la plus proche possible du témoin avec matière grasse, une stabilité satisfaisante vis à vis du durcissement ou de la fonte dans le temps.

### RESUME DE L'INVENTION

Forte de ce constat et après de nombreux travaux de recherche, la société Demanderesse a eu le mérite de répondre à toutes les exigences requises et a trouvé qu'un tel but pouvait être atteint dès lors que l'on utilise une combinaison particulière entre un hydrolysat d'amidon, non-fibreux en particulier une maltodextrine, et une fibre.

Il est donc du mérite de la Demanderesse d'avoir découvert qu'une combinaison entre un hydrolysat d'amidon non-fibreux étant une maltodextrine et une fibre végétale pouvait, de façon surprenante et inattendue par rapport aux prérequis de l'art antérieur remplacer avantageusement la matière grasse dans les confiseries, en particulier de type pâte à mâcher, tout en conservant les qualités organoleptiques, en particulier gustatives, olfactives, visuelles et tactiles, au moins équivalentes voire supérieures, à celles des confiseries traditionnelles contenant de de la matière grasse. De plus, l'invention permet également d'améliorer le temps de conservation des confiseries en évitant les problèmes de rancissement liés généralement à l'oxydation des matières grasses.

Les confiseries objet de l'invention présentent également un phénomène de déformation moindre lié dans certains cas à un ramollissement de la matière grasse.

La présente invention concerne donc une pâte à mâcher, présentant une teneur en matière grasse inférieure à 3%, caractérisée en ce qu'elle comprend un mélange entre un hydrolysat d'amidon non-fibreux et une fibre végétale, ledit hydrolysat d'amidon non-fibreux étant une maltodextrine.

Dans un mode de réalisation particulier, la pâte à mâcher selon l'invention comprend une teneur en matière grasse inférieure à 3 %, le pourcentage étant exprimé en poids par rapport au poids total de la confiserie.

Ladite pâte à mâcher est caractérisée en ce qu'elle comprend de 0,1% à 25% d'un hydrolysat d'amidon non-fibreux, de préférence de 2% à 10%, plus préférentiellement de 3% à 8%, les pourcentages étant exprimés en poids par rapport au poids total de la pâte à mâcher. Elle est également caractérisée en ce qu'elle comprend de 0,1% à 50% de fibre, de préférence de 1% à 10%, plus préférentiellement de 1% à 6%, les pourcentages étant exprimés en poids par rapport au poids total de la pâte à mâcher.

Selon un mode de réalisation avantageux, ladite pâte à mâcher selon l'invention est exempte de gélatine et/ou de sucre.

Selon un mode préféré, la maltodextrine possède un DE inférieur à 10, et plus préférentiellement encore un DE inférieur à 5.

Selon un mode encore plus préféré, l'hydrolysat d'amidon non-fibreux est une maltodextrine qui possède un DE égal à 2.

Dans la pâte à mâcher selon l'invention, la fibre végétale est choisie parmi les fibres solubles, les fibres insolubles ou leurs mélanges.

Selon un mode préféré, la fibre végétale insoluble est choisie parmi les amidons résistants, les fibres de céréales, les fibres de fruits, les fibres de légumes, les fibres de légumineuses ou leurs mélanges.

Selon un autre mode de réalisation préféré de l'invention, la fibre végétale soluble est choisie parmi les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles ou les oligosaccharides solubles issus de plantes oléagineuses ou protéagineuses.

Selon un mode plus préférentiel, la fibre végétale soluble est une maltodextrine branchée.

Selon un mode de réalisation particulier, la confiserie selon l'invention contient une gomme de base, en particulier de 5 % à 50% en poids de gomme de base.

Selon un mode de réalisation particulier, la confiserie selon l'invention est dépourvue de polyols.

L'invention concerne également l'utilisation d'un mélange d'un hydrolysat d'amidon, non-fibreux étant une maltodextrine, et d'une fibre végétale comme substitut de matière grasse dans une pâte à mâcher.

L'invention concerne également une composition de chewing-gum contenant, les pourcentages étant indiqués en poids sec par rapport au poids total de ladite composition de chewing-gum :
- de 5% à 25%, préférentiellement de 7% à 22%, d'au moins une gomme de base,
- de 5 à 90%, préférentiellement de 20% à 80 %, et plus préférentiellement encore de 30 à 75% de la pâte à mâcher selon l'invention,
- de 0,1 % à 8 %, préférentiellement de 0,1 % à 3 %, d'au moins un arôme.

L'invention concerne également le procédé de fabrication de cette composition de chewing-gum caractérisé en ce qu'il comprend les étapes suivantes :
- mélange ladite pâte à mâcher avec la gomme base,
- laminage ou extrusion du mélange,
- récupération des chewing-gums.

### DESCRIPTION DETAILLEE DES MODES DE REALISATION

La présente invention a pour objet une nouvelle pâte à mâcher, caractérisée en ce qu'elle présente une teneur en matière grasse inférieure à 3%, le pourcentage étant exprimé en poids par rapport au poids total de la pâte à mâcher, caractérisée en ce qu'elle comprend un mélange entre un hydrolysat d'amidon non-fibreux étant une maltodextrine et une fibre végétale.

Dans un mode préférentiel, la présente invention concerne une nouvelle pâte à mâcher comprenant de 0,1% à 25% d'une maltodextrine, de préférence de 2% à 10%, plus préférentiellement de 3% à 8%, les pourcentages étant exprimés en poids par rapport au poids total de la pâte à mâcher.

Dans un autre mode préférentiel, la présente invention concerne une nouvelle pâte à mâcher comprenant de 0,1% à 50% de fibre, de préférence de 1% à 10%, plus préférentiellement de 1% à 6%, les pourcentages étant exprimés en poids par rapport au poids total de la pâte à mâcher.

Les pâtes à mâcher concernées par la présente invention, se caractérisent par la présence de matières grasses qui leur donnent une texture tendre et souple, par opposition aux sucres cuits.

Les pâtes à mâcher contiennent également de l'air incorporé et le sucre est, en général, partiellement cristallisé afin d'obtenir une texture courte. Les sirops de glucose participent à la texture en facilitant la formation du réseau gélifié ainsi que le bon foisonnement du produit.

Les pâtes à mâcher sont très appréciées par les consommateurs pour leur propriété de masticabilité importante les faisant se rapprocher d'un chewing-gum. Contrairement au chewing-gum, la pâte à mâcher se dissout totalement dans la bouche après mastication et ne laisse aucun résidu non consommable.

Les pâtes à mâcher ne comprennent pas les caramels liants ou toute autre confiserie se présentant sous forme liquide ou semi-liquide.

La demanderesse a eu le mérite de trouver que l'utilisation d'une combinaison entre un hydrolysat non-fibreux étant une maltodextrine et une fibre végétale dans une pâte à mâcher contenant habituellement de la matière grasse, permet de substituer partiellement ou totalement cette matière grasse tout en permettant d'obtenir des pâtes à mâcher possédant toutes les caractéristiques organoleptiques et physiques d'une confiserie contenant ladite matière grasse.

Dans la présente invention, le terme « hydrolysat d'amidon » désigne tout produit obtenu par hydrolyse acide ou enzymatique d'amidon de légumineuses, de céréales ou de tubercules. Divers procédés d'hydrolyse sont connus et ont été décrits de manière générale aux pages 511 et 512 de l'ouvrage Encyclopedia of Chemical Technology de Kirk-Othmer, 3ème Edition, Vol. 22, 1978. Ces produits d'hydrolyse se définissent également comme des mélanges purifiés et concentrés formés de chaînes linéaires constituées d'unités D-glucose et de polymères de D-glucose essentiellement lié en a(1-4) avec seulement de 4 à 5 % de liaisons glucosidiques ramifiées a(1-6), de poids moléculaires extrêmement variés, complètement solubles dans l'eau. Les hydrolysats d'amidon sont très bien connus et parfaitement décrits dans Encyclopedia of Chemical Technology de Kirk-Othmer, 3ème Edition, Vol. 22, 1978, pp. 499 à 521.

Selon l'invention, l'hydrolysat d'amidon est non-fibreux.

Le produit d'hydrolyse de l'amidon comprend les maltodextrines, les sirops de glucose, le dextrose (forme cristallisée du α-D-glucose) ou leurs mélanges.

La distinction entre les produits d'hydrolyse de l'amidon repose principalement sur la mesure de leur pouvoir réducteur, exprimé classiquement par la notion de Dextrose Equivalent ou DE. Le DE correspond à la quantité de sucres réducteurs, exprimée en équivalent dextrose pour 100g de matière sèche du produit. Le DE mesure donc l'intensité de l'hydrolyse de l'amidon, puisque plus le produit est hydrolysé, plus il contient de petites molécules (telles que le dextrose et le maltose par exemple) et plus son DE est élevé. Au contraire, plus le produit contient de grandes molécules (polysaccharides), plus son DE est bas.

Du point de vue réglementaire, et également au sens de la présente invention, les maltodextrines ont un DE compris de 1 à 20, et les sirops de glucose ont un DE supérieur à 20. De tels produits sont par exemple les maltodextrines et les sirops de glucose déshydratés commercialisés par la Demanderesse sous les dénominations de GLUCIDEX® (DE disponibles = 1, 2, 6, 9, 12, 17, 19 pour les maltodextrines et DE = 21, 29, 33, 38, 39, 40, 47 pour les sirops de glucose). On peut également citer les sirops de glucose commercialisés par la Demanderesse sous la dénomination « Roquette sirops de glucose ».

Selon l'invention, l'hydrolysat d'amidon non-fibreux est caractérisé en ce qu'il est une maltodextrine, de préférence une maltodextrine possédant un DE inférieur à 10, et plus préférentiellement encore une maltodextrine possédant un DE inférieur à 5.

Selon un mode de réalisation particulièrement avantageux de l'invention, la maltodextrine possède un DE égal à 2.

La pâte à mâcher selon l'invention comprend également une fibre végétale.

Dans la présente invention, le terme « fibre végétale » désigne les fibres alimentaires végétales solubles et/ou insolubles. Les fibres végétales ne comprennent pas les hydrolysats d'amidon.

Les fibres végétales ne désignent pas seulement les matières fibreuses au sens strict, mais également toute une série de composés différents qui sont contenus presque exclusivement dans les aliments d'origine végétale et qui présentent la propriété commune de ne pouvoir être décomposés par les enzymes digestives de l'homme. Presque toutes les fibres alimentaires sont des polymères glucidiques. Depuis quelques années, les nutritionnistes se sont intéressés à un nouveau type de fibres alimentaires : l'amidon résistant. Il s'agit d'un amidon ou d'une fraction d'amidon qui n'est pas digérée dans l'intestin grêle et qui est fermentée par les bactéries du colon.

A la différence des fibres végétales traditionnelles, ces amidons présentent l'avantage de ne pas modifier l'apparence du produit dans lequel ils sont incorporés et constituent en quelque sorte une source de fibres invisible à l'œil nu. Ces amidons sont préconisés dans de nombreuses applications.

Ainsi, dans la présente invention, la fibre végétale est choisie parmi les fibres solubles, les fibres insolubles ou leurs mélanges.

Selon une premier mode de réalisation avantageux de l'invention, la fibre végétale est une fibre végétale insoluble, choisie parmi les amidons résistants. On pourra utiliser indifféremment les amidons résistants naturels ou les amidons résistants obtenus par modification chimique, et/ou physique, et/ou enzymatique.

Selon la présente invention, on désigne par amidon résistant, un amidon ou une fraction d'amidon qui n'est pas digérée dans l'intestin grêle et qui est fermentée par les bactéries du colon. Quatre catégories d'amidon résistant ont été identifiées :
- les amidons encapsulés, présents dans la plupart des aliments végétaux non raffinés tels que les légumes secs, qui sont inaccessibles aux enzymes (RS1),
- l'amidon granulaire de certains aliments crus comme la banane ou la pomme de terre et les amidons riches en amylose (RS2),
- les amidons rétrogradés, que l'on trouve dans les aliments cuits puis réfrigérés ou congelés (RS3),
- les amidons modifiés par voie chimique comme en particulier les amidons éthérifiés ou estérifiés (RS4).

Les amidons résistants proposés notamment par la société NATIONAL STARCH tels que ceux commercialisés sous l'appellation HI-MAIZE®, sont issus de variétés de maïs riches en amylose et se comportent comme des fibres insolubles. Des amidons résistants de type RS3 sont également proposés sous l'appellation NOVELOSE®.

Ces amidons résistants diminuent la réponse glycémique, améliorent la santé du système digestif grâce à leurs propriétés prébiotiques et contribuent à la régularité du transit, sans être à haute valeur calorique.

Selon un mode de réalisation avantageux de la présente invention, la pâte à mâcher comprend un mélange d'une maltodextrine et d'une fibre végétale soluble.

Selon ce mode de réalisation, la confiserie comprend de 0,1% à 50% de fibre, de préférence de 1% à 10%, plus préférentiellement de 1% à 6%, les pourcentages étant exprimés en poids par rapport au poids total de la confiserie.

Dans ce mode de réalisation avantageux de la présente invention, la confiserie comprend de 1 à 6% de fibres. Ainsi la mention « riches en fibres » ou « source de fibres » peut être apposée sur l'emballage de ladite confiserie. Ce qui représente un avantage nutritionnel et marketing supplémentaire. Ceci sera démontré dans les exemples ci-après.

La Société Demanderesse a non seulement diminué voire supprimé les matières grasses contenues traditionnellement dans les confiseries objets de la présente invention, mais a également enrichi ces dernières en fibres. L'intérêt de l'invention est donc double.

De préférence, ladite fibre soluble végétale est choisie parmi les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses ou leurs mélanges.

Par fibre soluble, on entend des fibres solubles dans l'eau. Les fibres peuvent être dosées selon différentes méthodes AOAC. On peut citer à titre d'exemple, les méthodes AOAC 997.08 et 999.03 pour les fructanes, les FOS et l'inuline, la méthode AOAC 2000.11 pour le polydextrose, la méthode AOAC 2001.03 pour le dosage des fibres contenues dans les maltodextrines branchées et les dextrines indigestibles ou la méthode AOAC 2001.02 pour les GOS ainsi que les oligosaccharides solubles issus de plantes oléagineuses ou protéagineuses. Parmi les oligosaccharides solubles issus de plantes oléagineuses ou protéagineuses, on peut citer les oligosaccharides de soja, de colza ou de pois.

Selon un mode de réalisation avantageux de la présente invention, la pâte à mâcher comprend un mélange d'une maltodextrine et des fibres végétales solubles qui sont des maltodextrines branchées.

On entend par maltodextrines branchées (MDB), les maltodextrines spécifiques identiques à celles décrites dans le brevet EP 1.006.128-B1 dont la Demanderesse est titulaire. Ces MDB ont l'avantage de représenter une source de fibres indigestibles bénéfiques pour le métabolisme et pour l'équilibre intestinal.

Selon la présente invention, lesdites maltodextrines branchées sont caractérisées en ce qu'elles présentent:
- entre 15 et 50% de liaisons glucosidiques 1-6, préférentiellement entre 22% et 45%, plus préférentiellement entre 20% et 40%, et encore plus préférentiellement entre 25% et 35%,
- une teneur en sucres réducteurs inférieure à 20%, préférentiellement comprise entre 2% et 20%, plus préférentiellement entre 2,5% et 15%, et encore plus préférentiellement entre 3,5% et 10%,
- un indice de polymolécularité inférieur à 5, préférentiellement compris entre 1 et 4, plus préférentiellement entre 1,5 et 3, et
- une masse moléculaire moyenne en nombre Mn inférieure à 4500 g/mole, préférentiellement comprise entre 400 et 4500 g/mole, plus préférentiellement entre 500 et 3000 g/mole, encore préférentiellement entre 700 et 2800 g/mole, encore plus préférentiellement comprise entre 1000 et 2600 g/mole.

En particulier, on pourra utiliser des MDB présentant entre 15 et 35% de liaisons glucosidiques 1-6, une teneur en sucres réducteurs inférieure à 20%, une masse moléculaire moyenne en poids MW comprise entre 4000 et 6000 g/mole et une masse moléculaire moyenne en nombre Mn comprise entre 250 et 4500 g/mole.

Certaines sous-familles de MDB décrites dans la susdite demande peuvent aussi être utilisées conformément à l'invention. Il s'agit par exemple de MDB de hauts poids moléculaires présentant une teneur en sucres réducteurs au plus égale à 5 et un Mn compris entre 2000 et 4500 g/mole. Les MDB de bas poids moléculaires présentant une teneur en sucres réducteurs comprise entre 5 et 20% et une masse moléculaire Mn inférieure à 2000 g/mole peuvent également être employées.

Dans un autre mode de réalisation avantageux de la présente invention, on pourra également utiliser, conformément à l'invention, les maltodextrines hyperbranchées hypo-glycémiantes décrites dans la demande FR 1251810 dont la Demanderesse est titulaire.

Dans la présente demande, les pyrodextrines désignent les produits obtenus par chauffage de l'amidon amené à faible taux d'humidité, en présence de catalyseurs acides ou basiques, et présentant généralement un poids moléculaire compris entre 1000 et 6000 daltons. Ce grillage à sec de l'amidon, le plus couramment en présence d'acide, entraîne à la fois une dépolymérisation de l'amidon et un réarrangement des fragments d'amidon obtenus, conduisant à l'obtention de molécules très ramifiées. Cette définition vise en particulier les dextrines dites indigestibles, d'un poids moléculaire moyen de l'ordre de 2000 daltons.

Le polydextrose est une fibre soluble produite par polymérisation thermique du dextrose, en présence de sorbitol et d'acide comme catalyseur. Un exemple d'un tel produit est par exemple le LITESSE® commercialisé par DANISCO.

Selon un mode particulièrement avantageux de la présente invention, la confiserie comprend du NUTRIOSE®, qui est une gamme complète de fibres solubles, reconnues pour leurs bienfaits, et fabriquées et commercialisées par la Demanderesse. Les produits de la gamme NUTRIOSE® sont des dérivés d'amidon de blé ou de maïs partiellement hydrolysés, qui contiennent jusqu'à 85 % de fibre. Cette richesse en fibre permet d'augmenter la tolérance digestive, d'améliorer la gestion de calorie, de prolonger le dégagement d'énergie et d'obtenir un taux de sucre inférieur. De plus, la gamme NUTRIOSE® est l'une des fibres les mieux tolérées disponibles sur le marché. Elle montre une tolérance digestive plus élevée, permettant une meilleure incorporation que d'autres fibres, ce qui représente de vrais avantages alimentaires.

Les intérêts d'ajouter des fibres et plus particulièrement des maltodextrines branchées comme le NUTRIOSE® à la confiserie de la présente invention sont multiples. Outre l'aspect nutritif et l'apport de fibres très bien tolérées par l'organisme, l'ajout de ces fibres présente également un intérêt technique non négligeable. En effet, ces fibres sont constituées de longues chaines polymériques glucidiques et jouent donc un rôle comme agent texturant dans les confiseries. La présence de fibres permet donc encore d'augmenter l'élasticité du produit final.

Ainsi, la durabilité de la masticabilité est augmentée par la présence de ces longues chaines qui modifient la texture du produit. Leur caractère branché diminue considérablement et avantageusement leur tendance à rétrograder, ce qui permet d'envisager leur utilisation dans les confiseries gélifiées ou l'absence de rétrogradation est nécessaire, en particulier lors d'un stockage prolongé.

La présence de maltodextrines branchées permet d'éviter les phénomènes de « cold flow » rencontrés dans les confiseries fabriquées par coulage sur une table de refroidissement après cuisson de tous les ingrédients. Dans ce type de procédé de fabrication, le phénomène de « cold flow » peut être observé. Il s'agit de la capacité de la pâte à mâcher ou du caramel à se déformer sans qu'il n'y ait de force appliquée. C'est donc sous l'effet de son propre poids que la confiserie aura tendance à couler et à s'écraser. Ceci est un défaut que les confiseurs cherchent absolument à éviter.

La présence de maltodextrines branchées permet également d'augmenter la température de transition vitreuse ou Tg de la partie amorphe de ladite confiserie. Cette augmentation de la Tg permet de rigidifier la structure au sein de la confiserie et permet par conséquent d'apporter une bonne tenue à la masticabilité.

La présente invention a donc pour objet une nouvelle pâte à mâcher caractérisée en ce qu'elle présente une teneur en matière grasse inférieure à 3% et comprenant un mélange entre un hydrolysat d'amidon, non-fibreux étant une maltodextrine, et plus préférentiellement encore une maltodextrine de DE inférieur à 5, et une fibre végétale, de préférence une maltodextrine branchée.

La présente invention a également pour objet l'utilisation d'un mélange d'un hydrolysat d'amidon, non-fibreux étant une maltodextrine, et d'une fibre végétale comme substitut de matière grasse dans une confiserie, en particulier une pâte à mâcher.

L'utilisation d'une telle composition permet de substituer en partie ou en totalité la matière grasse traditionnellement contenue dans les confiseries concernées, sans pour autant affecter les qualités organoleptiques finales du produit.

En effet, la matière grasse est nécessaire au niveau de la texture de ce genre de confiserie. Traditionnellement les confiseries de type pâtes à mâcher contiennent de la matière grasse afin d'assouplir leur texture et de diminuer le phénomène de collage aux dents. En absence de matière grasse, la confiserie devient sèche, cassante, voire râpeuse.

De nombreux travaux de recherche ont été menés afin de diminuer, voire de supprimer totalement la matière grasse dans les confiseries. Il n'existe pas à la connaissance de la Société Demanderesse de solution à ce jour.

Et pourtant, les intérêts de chercher à substituer la matière grasse dans les confiseries sont multiples. Tout d'abord, il est d'ordre nutritionnel. En arrivant à diminuer ou supprimer totalement la matière grasse, on diminue également la charge calorique totale de ladite confiserie.

Un deuxième intérêt est également, comme expliqué au début, de substituer l'huile de palme hydrogénée qui est mauvaise pour la santé.

La matière grasse traditionnellement présente dans les confiseries est sensible aux fortes chaleurs. Elle ramollit le produit et peut causer des problèmes de déformation, avec parfois des modifications au niveau de la texture. Ainsi en cherchant à la supprimer, on peut s'affranchir de ce genre de problèmes liés aux conditions climatiques.

Un autre intérêt de substitution de la matière grasse est de s'affranchir des problèmes d'oxydation des terpènes contenus dans certains arômes de type citrus. En effet, la matière grasse est sensible à l'oxydation et au rancissement.

Enfin la matière grasse utilisée est très souvent de l'huile de palme hydrogénée et n'est naturellement pas miscible avec les autres ingrédients de la recette. Ainsi, lors du procédé de préparation de la confiserie, il est très souvent nécessaire de passer par une phase de dispersion (ou émulsion) dans la masse. Ladite matière grasse peut également, tout au long du procédé, entrainer un phénomène d'exsudation, c'est-à-dire rejaillir à la surface du produit et le rendre brillant et surtout poisseux.

Grâce à ses nombreux travaux de recherche, la société Demanderesse a réussi à démontrer que la combinaison entre un hydrolysat d'amidon non-fibreux eétant une maltodextrine et une fibre végétale, et plus précisément la combinaison entre une maltodextrine et une maltodextrine branchée permet d'apporter la souplesse recherchée à la confiserie tout en évitant le phénomène de collage, habituellement écarté par l'utilisation de matière grasse.

Qui plus est, toutes les difficultés citées ci-dessus sont vaincues.

Les confiseries fabriquées selon l'invention présentent une texture identique voire supérieure aux confiseries contenant traditionnellement de la matière grasse. Habituellement la qualité finale des confiseries de l'art antérieur fabriquées en substituant partiellement la matière grasse était toujours inférieure et l'on observait très souvent des défauts : soit les confiseries étaient trop dures, soit elles étaient trop molles, soit elles étaient très collantes, soit elles se délitaient très rapidement, souvent trop rapidement. Bref la texture obtenue n'était pas en phase avec les exigences des consommateurs.

La présente invention permet de surmonter tous ces défauts en proposant une solution qui assure l'obtention de confiseries où la texture répond parfaitement aux exigences des consommateurs. Lesdites confiseries présentent une texture parfaite, élastique ni trop dure ni trop molle. De plus, le temps de masticabilité est augmenté et permet d'obtenir des confiseries qui ne se délitent pas trop vite lorsqu'elles sont consommées et qui permettent donc au consommateur d'avoir un temps de mastication tout à fait satisfaisant.

Selon un mode préférentiel de l'invention, la confiserie est dépourvue de matière grasse.

L'invention concerne aussi bien des confiseries contenant traditionnellement du sucre et/ou de la gélatine.

Selon un mode préféré de l'invention, il s'agit d'une confiserie sans sucre et sans gélatine.

De façon surprenante et inattendue, le mélange selon l'invention entre un hydrolysat d'amidon non-fibreux étant une maltodextrine et une fibre végétale, et plus précisément le mélange entre une maltodextrine et une maltodextrine branchée, permet également de formuler des confiseries exemptes de matière grasse et de gélatine, et/ou de sucre.

Selon un mode préférentiel de l'invention, la présente invention a pour objet une nouvelle confiserie, en particulier une pâte à mâcher, caractérisée en ce qu'elle est dépourvue de matière grasse, de gélatine et/ou de sucre et en ce qu'elle contient un mélange entre un hydrolysat d'amidon et une fibre végétale.

Selon la présente invention, les confiseries peuvent également comprendre de la gomme arabique. La gomme arabique est un mélange complexe et variable d'oligosaccharides, de polysaccharides et de glycoprotéines d'arabinogalactane. Selon la source, les composants de glycan contiennent une plus grande proportion de L-arabinose relatif aux D-galactose (acacia seyal) ou de D-galactose relatif aux L-arabinose (acacia Sénégal). La gomme de l'acacia seyal contient également significativement plus d'acide 4-O-methyl-D-glucuronic mais de moins de L-rhamnose et d'acide D-glucuronique non substitué que l'acacia Sénégal.

Son rôle en confiserie est de jouer sur la texture et d'apporter plus ou moins d'élasticité à la confiserie dans laquelle elle est utilisée. Elle permet par exemple d'allonger la masticabilité de la confiserie dans laquelle elle est utilisée, c'est-à-dire le temps nécessaire qu'il faut pour mâcher la confiserie jusqu'à son délitement total.

Bien que son utilisation présente des avantages, elle n'est dans la présente invention pas obligatoire.

Les confiseries selon l'invention peuvent également contenir un ou plusieurs agents édulcorants. On peut utiliser divers édulcorants, tels que sucres ou polyols, sous forme de poudre ou de sirop. Les sucres sont choisis parmi les monosaccharides, les disaccharides, les trisaccharides, les oligo et polysaccharides comme par exemple les sirops de glucose, de glucose-fructose, de fructose-glucose, les sirops de glucose riches en maltose, le saccharose, le fructose, le maltose, le tréhalose, le mannose, le dextrose, le tagatose ou l'isomaltulose, seuls ou en mélange entre eux. Les polyols sont choisis parmi le maltitol, le sorbitol, le mannitol, l'érythritol, le xylitol, l'iditol, les sirops de maltitol, l'isomalt, le lactitol, les sirops de sorbitol, les sirops de glucose hydrogénés, seuls ou en mélange entre eux. On peut également utiliser toute sorte d'édulcorants intenses comme par exemple la saccharine, l'aspartame ou l'acésulfame K, utilisés seuls ou en mélanges.

Selon l'invention, l'agent édulcorant représente de préférence 25 à 85%, de préférence 40 à 85% et plus préférentiellement de 60 à 85% en poids total de la confiserie.

Les confiseries selon l'invention peuvent également comprendre un ou plusieurs composés choisis parmi les sucres non réducteurs, les agents émulsifiants, les agents conservateurs, les agents foisonnants, les agents moussants, les agents gélifiants, les agents humectants, les acidifiants, les arômes naturel ou synthétiques, les exhausteurs de goût, les vitamines, les actifs pharmaceutiques, les minéraux tels que calcium, magnésium ou autres suppléments alimentaires tels que par exemple le DHA, les colorants naturels ou synthétiques, les sels, les acides, ou divers éléments destinés soit à améliorer la qualité, soit à aromatiser la composition tels que les fruits secs, les fruits confits, les fruits séchés ou autrement transformés (pressés, concentrés, en poudre), ainsi que les purées de fruits, pulpes de fruits, qui sont généralement présents dans la dite confiseries à hauteur de 0 à 30% en poids par rapport au poids total de la confiserie.

En outre, un procédé de préparation de confiseries est décrit caractérisé en ce qu'il comprend les étapes de :
- préparation d'un mélange comprenant de 0,1% à 25% d'un hydrolysat non-fibreux étant une maltodextrine de préférence de 2% à 10%, plus préférentiellement de 3% à 8%, les pourcentages étant exprimés en poids par rapport au poids total de la confiserie, et de 0,1% à 50% d'une fibre végétale, de préférence de 1% à 10%, plus préférentiellement de 1% à 6%, les pourcentages étant exprimés en poids par rapport au poids total de la confiserie,
- cuisson du mélange à une température comprise entre 100 et 150. °C jusqu'à l'obtention de la matière sèche voulue,
- étirement du mélange cuit,
- refroidissement,
- découpage,
- récupération des confiseries et éventuellement papillotage.

Pour une fabrication en continu, on préfère disperser les édulcorants, l'hydrolysat d'amidon et les fibres dans une cuve de mélange, préchauffer ce mélange à environ 70-80°C pour dissoudre les édulcorants, cuire le mélange sur cuiseur haute pression à une température comprise entre 100 et 150°C suivant la texture souhaitée et le type de confiserie préparée, puis ajouter l'émulsifiant, le ou les agents foisonnants, les arômes, les colorants, les principes actifs, et les édulcorants intenses. La température de cuisson du mélange sera inférieure ou égale à 150°C, ce qui constitue un des avantages de la présente invention. La durée de cuisson dépend du matériel utilisé.

La cuisson peut être effectuée sur des cuiseurs à double enveloppe à pression atmosphérique, sous vide partiel ou total ou sous pression, ou en continu sur des cuiseurs haute pression comme les échangeurs tubulaires, les échangeurs à plaques ou les jet-cookers. Le jet-cooker peut comporter un ou plusieurs injecteurs de vapeur, ce qui modifie les temps de cuisson. L'injection de vapeur vive dans le produit assure une dispersion rapide et homogène de la chaleur et des ingrédients. L'échangeur tubulaire nécessite une dispersion homogène de tous les ingrédients avant cuisson, les durées de cuisson sont plus longues et l'intensité moins forte.

Après la cuisson, l'émulsifiant, le ou les agents foisonnants, les arômes, colorants, acides et autres sont ajoutés dans le sirop chaud à une température comprise entre 60 et 90°C, le mélange est ensuite coulé sur une plaque de refroidissement, et on procède à un étirage pendant environ une minute à 50-60 battements. Une fois l'étirage effectué, on procède à la mise en forme et au papillonnage des confiseries obtenues.

La Société Demanderesse a poussé ses recherches et a démontré que la confiserie selon l'invention pouvait également être associée à d'autres confiseries déjà existantes, afin de créer soit de nouvelles confiseries avec des textures différentes des confiseries existantes déjà sur le marché, ou afin de résoudre des problèmes techniques jusqu'alors non résolus par les solutions de l'art antérieur.

De façon surprenante et inattendue, il a été démontré par de nombreux essais que la confiserie selon l'invention pouvait être utilisée dans une recette de fabrication de chewing-gum.

Les compositions de chewing-gum actuelles, formulées avec ou sans sucre, de type bubble-gum ou non, éventuellement dragéifiées, contiennent au moins une gomme de base non hydrosoluble, au moins un agent sucrant sous forme de poudre et/ou de liquide, et au moins un arôme. Elles peuvent aussi contenir de manière non exhaustive des colorants, des émulsifiants, des plastifiants, des édulcorants intenses, des lubrifiants alimentaires, des principes pharmaceutiques, ou de l'eau.

La fabrication des centres de chewing-gum ou bubble-gum sans sucre, également appelés coussinets, nécessite le mélange de gomme de base avec des polyols, utilisés comme édulcorants de charge.

Dans les recettes standards de fabrication de chewing-gum sans sucre, la gomme de base représente typiquement entre 28 et 40% des ingrédients mis en œuvre dans la fabrication des centres, le reste étant constitué majoritairement par des polyols, et plus faiblement par des édulcorants intenses de type aspartame ou acésulfame-K, des arômes, des anti-oxydants dans certains cas.

La nature de la gomme de base est également adaptée au type de chewing-gum fabriqué. Elle peut également comprendre des élastomères synthétiques et/ou naturels comme le polyisoprène, l'acétate de polyvinyle, le polyisobutylène, des latex, des résines comme les résines terpéniques, les esters et les alcools de polyvinyle, des matières grasses ou des cires comme par exemple la lanoline, les huiles végétales partiellement hydrogénées ou non, les acides gras, les esters partiels de glycérol, la paraffine, les cires microcristallines, des agents de charge comme du talc, le carbonate de calcium, des plastifiants d'élastomères comme le triacétate de glycérol, le monostéarate de glycérol, les dérivés de collophanes, des émulsifiants comme la lécithine, les esters de sorbitol, des colorants ou des agents de blanchiment, des antioxydants, des agents anticollants comme le mannitol.

Les édulcorants de charge sont constitués d'oses non fermentescibles pouvant être choisis parmi l'isomaltulose, le xylose, le xylulose, l'allulose, l'arabinose, le leucrose, le tagatose, le tréhalulose ou le raffinose.

Les édulcorants de charge peuvent également être constitués d'un mélange de polyols et d'oses non fermentescibles pouvant être choisis parmi l'isomaltulose, le xylose, le xylulose, l'allulose, l'arabinose, le leucrose, le tagatose, le tréhalulose ou le raffinose.

De façon préférée, les édulcorants de charge sont constitués uniquement de polyols.

Les polyols jouent un rôle crucial dans la fabrication des centres de chewing-gum sans sucre, à la fois dans la qualité finale du produit obtenu (impact de la saveur sucrée et effet « long lasting », impact sur l'aromatisation et effet « long lasting », croustillance, dureté, masticabilité) mais également dans le procédé de préparation desdits centres. Typiquement, les principaux polyols utilisés dans la production de chewing-gum ou bubble gum sans sucre sont le maltitol, le sorbitol, l'isomalt, le mannitol et le xylitol. Ces polyols sont utilisés à la fois sous la forme cristalline poudreuse et sous la forme liquide dans la formulation de ces centres. Une composition de chewing-gum sans sucre contient généralement entre 65 et 80% de polyols, sous la forme pulvérulente et/ou liquide.

La recette de la gomme de base reste souvent secrète car celle-ci n'est pas constante. Elle varie en fonction du prix de la matière première. Les ingrédients constitutifs de la gomme de base sont insolubles dans l'eau. Par contre, la majorité des ingrédients constitutifs des chewing-gums, à l'exception de la gomme de base, est soluble dans l'eau (c'est-à-dire la salive ici). Au bout de 3 à 4 minutes de temps de mastication, les composés sont extraits (solubilisés) par la salive, d'où la perte de goût du chewing-gum. Il reste en bouche la gomme de base et quelques arômes qui ne sont pas solubles dans l'eau, et/ou qui sont restés emprisonnées dans la matrice constituée par la gomme de base.

On ajoute à cette gomme de base les arômes, les édulcorants ou le sucre ainsi que divers additifs et auxiliaires de fabrication (tels que colorant, émulsifiant, stabilisant, bicarbonate). Les ingrédients et la gomme de base sont mélangés dans un pétrin pendant 15 à 20 minutes. En fin de malaxage, la pâte atteint une température de 50 °C environ. La pâte de chewing-gum est déposée à l'intérieur d'une extrudeuse. Bien pressée, elle forme maintenant des bandes plus ou moins épaisses. Les bandes passent ensuite dans le laminoir et sont découpées en tablettes ou en noyaux appelés également centres. Après refroidissement, les tablettes ou les centres sont maintenus à une température et une humidité contrôlées pendant 6 à 48 heures. Cette phase est très contrôlée, car la qualité des gommes à mâcher en dépend.

Les tablettes sont enveloppées dans un emballage en aluminium pour conserver toute leur saveur. Elles sont ensuite mises en paquets. Les centres sont dragéifiés avant d'être emballés dans des contenants en carton ou en plastique.

Quel que soit l'âge des consommateurs, la volonté d'avoir des produits de qualité est permanente. La qualité des chewing-gums se mesure par plusieurs paramètres, dont la texture du chewing-gum (plutôt dur ou au contraire plutôt mou, croustillance persistante des dragées lors de la mastication) et le goût (saveur sucrée, effet rafraîchissant ou non, persistance de l'arôme lors de la mastication). En effet, les consommateurs se plaignent très souvent de la disparition trop rapide à la fois de la croustillance et du goût lors de la mastication.

Ainsi, dans un mode de réalisation particulièrement avantageux, la présente invention concerne également l'utilisation de la pâte à mâcher selon l'invention comme ingrédient dans la fabrication de chewing-gums.

Dans un mode préférentiel, la pâte à mâcher selon l'invention utilisée dans une recette de chewing-gum traditionnel sera exempte de matière grasse.

L'utilisation de la pâte à mâcher selon l'invention dans une recette standard de chewing-gum permet de substituer une partie ou la totalité de la phase cristalline traditionnellement contenue dans cette recette de chewing-gum.

Ainsi dans un mode préférentiel, la phase cristalline du chewing-gum est partiellement remplacée par la phase amorphe de la confiserie selon l'invention.

Les chewing-gums contiennent une phase cristalline importante, pouvant représenter jusqu'à 80% en poids sur sec des ingrédients mis en œuvre. Cette phase cristalline donne des produits durs à l'attaque lors de la mastication, et longs à hydrater. L'utilisation de la confiserie selon l'invention comme substitut de la phase cristalline permet d'obtenir une texture plus souple, et donc plus facile à hydrater. Cette capacité de dissolution plus rapide va permettre lors de la dégustation une libération plus instantanée des arômes et/ou des acides contenus dans la recette. Ainsi, la perception aromatique sera plus rapide et plus intense. On parle de « boost » sensoriel.

Dans le passé, la Société Demanderesse avait déjà réalisé des essais de substitution partielle de phase cristalline dans une recette de chewing-gum par une pâte à mâcher classique donc contenant de la matière grasse. Très vite, les pourcentages de substitution sont arrivés à saturation, du fait de la présence de matière grasse dans la composition. En effet, la matière grasse a un rôle de plastifiant de la gomme de base du chewing-gum et finit par détruire sa structure lorsqu'elle utilisée en quantité trop importante. Du fait de l'absence de matière grasse dans la confiserie utilisée, la substitution de la phase cristalline dans une recette de chewing-gum n'est plus limitée.

Selon un mode de réalisation de l'invention, la substitution de la phase cristalline dans un chewing-gum par la pâte à mâcher selon l'invention peut être totale. La pâte à mâcher selon l'invention peut donc être utilisée pour préparer un chewing-gum dépourvu de phase cristalline.

La confiserie selon l'invention peut ainsi être un chewing-gum contenant une gomme de base, en particulier de 5 % à 50% en poids de gomme de base, et un mélange entre un hydrolysat d'amidon non-fibreux étant une maltodextrine et une fibre végétale.

Selon un mode de réalisation particulier, ledit chewing-gum est dépourvu de polyols.

Cette diminution voire suppression de la phase cristalline (polyols dans la majorité des cas) permet de réduire fortement les troubles intestinaux (ballonnements, flatulences, effet laxatif) liés à une trop grande consommation de polyols.

L'utilisation de la pâte à mâcher selon l'invention dans une recette standard de chewing-gum apporte plusieurs autres avantages non négligeables.

L'introduction de la confiserie dans une recette de chewing-gum permet également de diminuer la quantité de gomme de base utilisée, et donc également la quantité d'arômes à utiliser.

Un autre avantage procuré par l'utilisation de la pâte à mâcher selon l'invention dans une recette de chewing-gum est la création de nouvelles textures et de nouvelles confiseries. En faisant varier la quantité de gomme de base versus la quantité de la pâte à mâcher selon l'invention, la Société Demanderesse est arrivée à l'obtention de confiseries d'un nouveau type, possédant une première partie sous la forme de pâte à mâcher qui finit par se dissoudre et disparaitre et une seconde partie sous la forme de gomme de base qui est le résidu que l'on jette une fois la consommation terminée.

Dans la présente invention, le terme chewing-gum est utilisé indifféremment pour désigner les chewing-gums et les bubble-gums. La différence entre ces deux types étant d'ailleurs assez floue. On a coutume de dire que les chewing-gums se mâchent alors que les bubble-gums sont destinés à faire des bulles, et donc sont traditionnellement plutôt consommés par un jeune public.

La Société Demanderesse a en effet, après de nombreux essais, réussi à démontrer que la confiserie selon l'invention pouvait avoir une utilisation particulièrement intéressante dans la fabrication de chewing-gums, puisqu'elle permettait de réduire la quantité de gomme de base employée dans la recette, et ce jusqu'à 70%.

La pâte à mâcher selon l'invention peut donc être utilisée pour préparer un chewing-gum contenant au plus 25% de gomme de base.

Lorsqu'on sait qu'une partie des arômes reste emprisonnée dans la gomme de base lors de la mastication et qu'ils ne sont jamais relargués dans la salive, l'intérêt de l'utilisation de la confiserie selon l'invention comme ingrédient dans la fabrication d'un chewing-gum est double puisqu'en permettant d'une part la réduction du taux de gomme de base, elle permet également de diminuer la quantité d'arômes utilisés. Ce qui engendre une réduction au niveau des coûts de fabrication importante, et donc très intéressante pour les industriels.

Non seulement il est possible de mettre moins d'arôme, mais en plus ils seront libérés plus rapidement.

Ainsi la présente invention concerne également une composition de chewing-gum contenant, les pourcentages étant indiqués en poids sec par rapport au poids total de ladite composition de chewing-gum :
- de 5% à 25%, préférentiellement de 7% à 22%, d'au moins une gomme de base,
- de 5 à 90%, préférentiellement de 20% à 80 %, et plus préférentiellement encore de 30 à 75% de la pâte à mâcher selon l'invention,
- de 0,1 % à 8 %, préférentiellement de 0,1 % à 3 %, d'au moins un arôme.

L'invention concerne également un procédé de fabrication d'une composition de chewing-gum caractérisé en ce qu'il comprend les étapes suivantes :
- mélange la pâte à mâcher selon invention avec la gomme base,
- laminage ou extrusion du mélange,
- récupération des chewing-gums.

Traditionnellement, la fabrication de chewing-gum nécessite un équipement bien particulier et couteux, constitué au minimum d'un pétrin, d'un extrudeur et d'un laminoir. Le fait de substituer une partie de la phase cristalline et/ou de la gomme de base dans une recette de chewing-gum par la confiserie selon l'invention permet également de ne plus avoir besoin d'avoir recours à l'équipement type pour fabriquer le chewing-gum. En effet, il est possible d'utiliser une ligne de fabrication de pâte à mâcher pour fabriquer le nouveau chewing-gum.

Ce qui représente un avantage considérable puisque les industriels disposant d'une ligne de fabrication pâte à mâcher pourront désormais fabriquer des confiseries de type chewing-gums.

Ainsi l'utilisation de la pâte à mâcher selon l'invention en remplacement d'une partie de la gomme de base et/ou de la phase cristalline dans une recette de chewing-gums apporte des avantages considérables.

Un dernier avantage est la mise au point de nouveaux types de confiseries avec des textures nouvelles. En effet, en combinant à la fois de la gomme de base avec une confiserie de type pâte à mâcher, il est possible de créer toutes sortes de nouvelles confiseries en jouant sur les proportions de la gomme de base par rapport à la pâte à mâcher selon l'invention, mais également en jouant sur la façon de combiner ces deux constituants.

Effectivement, dans un mode de réalisation de ces nouvelles confiseries, il est possible de mélanger la gomme de base avec la pâte à mâcher dans un mélangeur, avant de donner ensuite au chewing-gum la forme désirée. Dans ce type de nouvelles confiseries, il y aura donc un mélange intime entre la gomme de base et la pâte à mâcher.

Selon un autre mode de réalisation de l'invention, il est possible également de créer une nouvelle confiserie en alternant les couches de gomme de base et celle de pâte à mâcher. Il est également envisageable de faire des dispositions sous la forme de couches ou également de donner des formes diverses telle des formes torsadées.

Selon un autre mode de réalisation, il est également envisageable d'entourer un noyau constitué de gomme de base par la pâte à mâcher selon l'invention, et vice et versa.

L'intérêt de la présente invention est donc extrêmement important puisque d'une part il est possible de substituer une partie mais de préférence la totalité des matières grasses présentes initialement dans une confiserie de type pâte à mâcher, mais que d'autre part il est également envisageable d'utiliser cette confiserie exempte de matière grasse et contenant un hydrolysat d'amidon et une fibre dans une recette de chewing-gum, pour substituer une partie de la gomme de base et/ou la phase cristalline et créer ainsi de nouvelles textures.

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### Exemple 1 : Pâtes à mâcher sans sucre selon l'invention

L'objectif est de réaliser des confiseries gélifiées de type pâtes à mâcher sans sucre ajouté, ne contenant plus du tout de matière grasse (MG) et contenant un mélange d'un hydrolysat d'amidon non-fibreux en particulier une maltodextrine de DE = 2 et d'une fibre végétale, en particulier une maltodextrine branchée, selon l'invention.

Dans cet exemple, des pâtes à mâcher ont été réalisées à partir d'une recette traditionnelle contenant de la matière grasse de type biscuitine 521, dans laquelle on a substitué la matière grasse de type biscuitine 521 par le mélange selon l'invention.

Le témoin est une recette classique de pâte à mâcher sans sucre et contenant de la matière grasse.

L'essai 1 concerne des pâtes à mâcher ne contenant plus du tout de matière grasse mais contenant encore de la gélatine. La substitution de matière grasse a donc été totale.

L'essai 2 concerne des pâtes à mâcher ne contenant plus du tout de matière grasse et exemptes également de gélatine.

### A - Formules

Les formules utilisées pour le témoin et pour les essais 1 et 2 sont présentées dans le tableau 1.1 ci-dessous. Les teneurs caloriques pour le témoin et pour les essais 1 et 2 sont présentées dans le tableau 1.2 ci-dessous.

La Biscuitine™ 621 est une matière grasse végétale hydrogénée, raffinée non laurique possédant un point de fusion de 35 °C et commercialisée par la société Loders Croklaan B.V., Wormerveer, pays Bas. Les sucroesters HLB5 sont des esters de saccharose et d'acides gras obtenus par transestérification d'esters méthyliques et de saccharose, utilisés comme agents émulsifiants non ioniques des matières grasses, et commercialisés par la société Stéarinerie Dubois à Boulogne, France.

La maltodextrine Glucidex 2 est une maltodextrine commercialisée par la Société Demanderesse.

Le Nutriose® FB06 est une maltodextrine branchée également commercialisée par la Demanderesse. L'arôme pomme est commercialisé par la société Symrise AG, Clichy-la-Garenne, France.

### B - Méthode

- Verser l'eau potable froide dans une cuve.
- Introduire les parties A et B sous agitation énergique. Attendre la parfaite dissolution et vérifier l'absence de grumeaux.
- Cuire le mélange précédent est à température déterminée et à pression atmosphérique pour obtenir un mélange à 90-94% de matières sèches. Dans cet exemple la température de cuisson est de 138°C pour le témoin et de 126°C pour les deux essais. Il est également possible de cuire le précédent mélange sous vide à une pression de -0,5b. Bien mélanger pendant l'étape de cuisson afin d'éviter que le mélange ne brûle.
- Pour le témoin et l'essai 1 contenant de la gélatine, ajouter la gélatine (partie C) fondue en solution à 60°C après la cuisson du mélange précédent et refroidissement de ce dernier à une température d'environ 80 °C.
- Une fois la masse refroidie en dessous des 80 °C, ajouter la partie D.
- Couler la pâte à mâcher sur une table à refroidissement jusqu'à être à une température comprise entre 50 et 60 °C.
- Etirer la pâte à mâcher pendant 1 minute (50 à 60 battements) pour obtenir une bonne aération. L'aération peut également être obtenue dans un foisonneur sous pression (1 à 2 bars) dans un procédé de fabrication en continu.
- Laisser la pâte à mâcher aérée au repos pour son refroidissement (entre 45 °C et 55 °C) et afin qu'elle reprenne de la texture.
- Former, découper et emballer les confiseries.

### C - Tests

Pour ces différents essais, les pâtes à mâcher ont été dégustées par un jury entrainé de 10 personnes qui a noté la texture en bouche selon trois paramètres : caractère collant, dureté, élasticité.

Le temps de mastication, c'est-à-dire le temps mesuré entre l'introduction de la pâte à mâcher dans la cavité buccale jusqu'à son délitement total sous une mastication dite normale, a également été déterminé à l'aide d'un chronomètre.

### D - Analyse

Les confiseries témoin présentent une bonne texture élastique et une rondeur en bouche apportée par la présence de matière grasse.

Leur élasticité et leurs masticabilité sont conformes aux attentes des dégustateurs concernant ce type de confiserie et leur temps de masticabilité a été de 2 minutes.

Les confiseries des essais 1 et 2 présentent des textures élastiques tout à fait satisfaisantes par rapport aux attentes des consommateurs et similaires aux confiseries témoin contenant de la matière grasse.

Ces confiseries bien que ne contenant plus de matière grasse, présentent la même rondeur en bouche que les confiseries témoin.

Leur temps de masticabilité a également été mesuré et est similaire à celui des confiseries témoin.

Qui plus est, bien que ne contenant plus de matière grasse, les confiseries des essais 1 et 2 n'ont pas du tout été jugées comme étant collantes.

Enfin, aucune différence n'a été notée par rapport à l'essai contenant de la gélatine et celui n'en contenant pas.

Ceci démontre parfaitement que l'utilisation d'un mélange de maltodextrine de DE = 2 et de maltodextrine branchée selon l'invention permet d'obtenir des confiseries qui possèdent une très bonne texture élastique, une absence de collage au niveau du palais ou des dents et une durée de masticabilité tout à fait en adéquation avec les attentes des consommateurs.

L'intérêt de l'invention est donc parfaitement démontré.

De plus, la substitution de la matière grasse par un mélange de maltodextrine de DE = 2 et de maltodextrine branchée selon l'invention permet également de substituer la gélatine puisqu'aucune différence n'a été signalée en présence ou en absence de gélatine dans les confiseries des essais 1 et 2.

Les confiseries des essais 1 et 2 ne contiennent plus de matière grasse, ne contiennent pas non plus de sucre ajouté et sont enrichies en fibres.

L'intérêt de l'invention est donc parfaitement démontré.

### Exemple 2 : Pâtes à mâcher avec sucre selon l'invention

L'objectif est de réaliser des confiseries gélifiées de type pâtes à mâcher contenant cette fois-ci du sucre ajouté, ne contenant plus du tout de matière grasse et contenant un mélange de maltodextrine de DE = 2 et de maltodextrines branchées selon l'invention.

Dans cet exemple, des pâtes à mâcher ont été réalisées à partir d'une recette traditionnelle contenant de la matière grasse de type biscuitine 521, dans laquelle on a substitué la matière grasse de type biscuitine 521 par le mélange selon l'invention.

Le témoin est une recette classique de pâte à mâcher au sucre et contenant de la matière grasse.

L'essai 1 concerne des pâtes à mâcher ne contenant plus du tout de matière grasse mais contenant encore de la gélatine. La substitution de matière grasse a donc été totale.

L'essai 2 concerne des pâtes à mâcher ne contenant plus du tout de matière grasse et exemptes également de gélatine.

### A - Formules

Les formules utilisées pour le témoin et pour les essais 3 et 4 sont présentées dans le tableau 2.1 ci-dessous. Les teneurs caloriques pour le témoin et pour les essais 3 et 4 sont présentées dans le tableau 2.2 ci-dessous.

Le sirop de glucose c4280 est un sirop de glucose commercialisé par la Société Demanderesse.

### B - Méthode

- Verser l'eau potable froide dans une cuve.
- Introduire les parties A et B sous agitation énergique. Attendre la parfaite dissolution et vérifier l'absence de grumeaux.
- Cuire le mélange précédent est à température déterminée et à pression atmosphérique pour obtenir un mélange à 90-94% de matières sèches. Dans cet exemple la température de cuisson est de 128°C pour le témoin et de 122°C pour les deux essais. Il est également possible de cuire le précédent mélange sous vide à une pression de -0,5b. Bien mélanger pendant l'étape de cuisson afin d'éviter que le mélange ne brûle.
- Pour le témoin et l'essai 3 contenant de la gélatine, ajouter la gélatine (partie C) fondue en solution à 60°C après la cuisson du mélange précédent et refroidissement de ce dernier à une température d'environ 80 °C.
- Une fois la masse refroidie en dessous des 80 °C, ajouter la partie D.
- Couler la pâte à mâcher sur une table à refroidissement jusqu'à être à une température comprise entre 50 et 60 °C.
- Etirer la pâte à mâcher pendant 1 minute (50 à 60 battements) pour obtenir une bonne aération. L'aération peut également être obtenue dans un foisonneur sous pression (1 à 2 bars) dans un procédé de fabrication en continu.
- Laisser la pâte à mâcher aérée au repos pour son refroidissement (entre 45 °C et 55 °C) et afin qu'elle reprenne de la texture.
- Former, découper et emballer les confiseries.

### C - Tests

Pour ces différents essais, les pâtes à mâcher ont été dégustées par un jury entrainé de 10 personnes qui a noté la texture en bouche selon trois paramètres : caractère collant, dureté, élasticité.

Le temps de mastication, c'est-à-dire le temps mesuré entre l'introduction de la pâte à mâcher dans la cavité buccale jusqu'à son délitement total sous une mastication dite normale, a également été déterminé à l'aide d'un chronomètre.

### D - Analyse

Les analyses sont identiques à celles de l'exemple 1.

Les confiseries témoin présentent une bonne texture élastique et une rondeur en bouche apportée par la présence de matière grasse.

Leur élasticité et leurs masticabilité sont conformes aux attentes des dégustateurs concernant ce type de confiserie et leur temps de masticabilité a été de 2 minutes.

Les confiseries des essais 3 et 4 présentent des textures élastiques tout à fait satisfaisantes par rapport aux attentes des consommateurs et similaires aux confiseries témoin contenant de la matière grasse.

Ces confiseries bien que ne contenant plus de matière grasse, présentent la même rondeur en bouche que les confiseries témoin.

Leur temps de masticabilité a également été mesuré et est similaire à celui des confiseries témoin.

Qui plus est, bien que ne contenant plus de matière grasse, les confiseries des essais 3 et 4 n'ont pas du tout été jugées comme étant collantes.

Enfin, aucune différence n'a été notée par rapport à l'essai contenant de la gélatine et celui n'en contenant pas.

Ceci démontre parfaitement que l'utilisation d'un mélange de maltodextrine de DE = 2 et de maltodextrines branchées selon l'invention permet d'obtenir des confiseries qui possèdent une très bonne texture élastique, une absence de collage au niveau du palais ou des dents et une durée de masticabilité tout à fait en adéquation avec les attentes des consommateurs.

L'intérêt de l'invention est donc parfaitement démontré.

De plus, la substitution de la matière grasse par un mélange de maltodextrine de DE = 2 et de maltodextrines branchées selon l'invention permet également de substituer la gélatine puisqu'aucune différence n'a été signalée en présence ou en absence de gélatine dans les confiseries des essais 1 et 2. 0

Les confiseries des essais 3 et 4 ne contiennent plus de matière grasse et sont enrichies en fibres.

L'intérêt de l'invention est donc parfaitement démontré.

**TABLEAU 1.1 : Compositions de pâtes à mâcher sans sucres ajoutés selon l'invention (Exemple 1)**

| | **INGREDIENTS** | **Témoin** | | **Essai 1 (avec gélatine et sans MG)** | | **Essai 2 (sans gélatine et sans MG)** | |
|---|---|---|---|---|---|---|---|
| | | Mise en oeuvre (g) | Composition finale (%) | Mise en oeuvr (g) | Composition finale (%) | Mise en oeuvre (g) | Composition finale (%) |
| **Partie A** | Sirop de maltitol Lycasin 80/55 | 799 | 71,9 | 778 | 69,6 | 800 | 69,9 |
| | Mannitol 60 | 88 | 10,5 | 100 | 12,4 | 120 | 14 |
| **Partie B** | Biscuitine™ 521 | 57 | 6,8 | - | - | - | - |
| | Sucroester HLB5 | 2 | 0.2 | 1 | 0,1 | 1 | 0,1 |
| | Maldodextrine Glucidex 2 | - | | 42 | 4,9 | 42 | 4,9 |
| | Nutriose® FB06 | - | | 20 | 2,3 | 20 | 2,3 |
| **Partie C** | Gélatine 175bl à 40% | 42 | 2 | 42 | 2 | - | - |
| **Partie D** | Amorce mannitol 60 | 4 | 0,5 | 10 | 1 | 10 | 1 |
| | Arôme pomme | 4 | 0,4 | 4 | 0,4 | 4 | 0,4 |
| | Acide citrique anhydre | 4 | 0,5 | 3 | 0,3 | 3 | 0,3 |
| | Eau résiduelle calculée | | 7,2 | | 7 | | 7 |
| | **TOTAL** | 1000 | 100 | 1000 | 100 | 1000 | 100 |

**TABLEAU 1.2 : Teneur calorique des compositions de pâtes à mâcher sans sucres ajoutés selon l'invention (Exemple 1)**

| | Témoin | Essai 1 (avec gélatine et sans MG) | Essai 2 (sans gélatine et sans MG) |
|---|---|---|---|
| Calories (kCal) | 226 | 189 | 186 |
| Protéines | 1,8 | 1,8 | 0,0 |
| MG | 7,0 | 0,1 | 0,1 |
| Sucres | 0,0 | 5,0 | 5,0 |
| ... *dont DP1,2* | *0,0* | *0,0* | *0,0* |
| Fibres | 0,0 | 1,9 | 1,9 |
| ... *fibres insolubles* | *0,0* | *0,0* | *0,0* |
| ... *fibres solubles* | *0,0* | *1,9* | *1,9* |
| Polyols | 64,8 | 65,4 | 67,3 |

**TABLEAU 2.1 : Compositions de pâtes à mâcher au sucre selon l'invention (Exemple 2)**

| | **INGREDIENTS** | **Témoin** | | **Essai 3 (avec gélatine et sans MG)** | | **Essai 4 (sans gélatine et sans MG)** | |
|---|---|---|---|---|---|---|---|
| | | Mise en oeuvre (g) | Composition finale (%) | Mise en oeuvre (g) | Composition finale (%) | Mise en oeuvre (g) | Composition finale (%) |
| **Partie A** | Glucose c4280 | 370 | 34,4 | 358 | 33,7 | 370 | 34,6 |
| | Saccharose | 416 | 48,3 | 411 | 48,7 | 426 | 49,8 |
| | Eau | 100 | | 113 | | 128 | |
| **Partie B** | Biscuitine™ 521 | 57 | 6,6 | - | - | - | - |
| | Sucroester HLB5 | 2 | 0.2 | 1 | 0,1 | 1 | 0,1 |
| | Maldodextrine Glucidex 2 | - | | 42 | 4,7 | 42 | 4,7 |
| | Nutriose® FB06 | - | | 20 | 2,2 | 20 | 2,2 |
| **Partie C** | Gélatine 175bl à 40% | 42 | 2 | 42 | 2 | - | - |
| **Partie D** | Amorce sucre glace | 4 | 0,5 | 4 | 0,5 | 4 | 0,5 |
| | Arôme pomme | 3 | 0,3 | 3 | 0,4 | 3 | 0,4 |
| | Acide citrique anhydre | 6 | 0,7 | 6 | 0,7 | 6 | 0,7 |
| | Eau résiduelle calculée | | 7 | | 7 | | 7 |
| | **TOTAL** | 1000 | 100 | 1000 | 100 | 1000 | 100 |

**TABLEAU 2.2 : Teneur calorique des compositions de pâtes à mâcher au sucre selon l'invention (Exemple 2)**

| | Témoin | Essai 3 (avec gélatine et sans MG) | Essai 4 (sans gélatine et sans MG) |
|---|---|---|---|
| Calories (kCal) | 374 | 336 | 336 |
| Protéines | 1,8 | 1,8 | 0,0 |
| MG | 6,8 | 0,1 | 0,1 |
| Sucres | 76,3 | 81,0 | 82,9 |
| ... *dont DP1,2* | *57,1* | *57,4* | *58,7* |
| Fibres | 0,0 | 1,8 | 1,8 |
| ... *fibres insolubles* | *0,0* | *0,0* | *0,0* |
| ... *fibres solubles* | *0,0* | *1,8* | *1,8* |
| Polyols | 0,0 | 0,0 | 0,0 |

### Exemple 3 : Chewing-gums avec pâtes à mâcher sans matière grasse selon l'invention

L'objectif des exemples ci-dessous est de réaliser des chewing-gums en substituant une partie ou la totalité de la phase cristalline par une confiserie selon l'invention, en particulier gélifiée de type pâte à mâcher sans matière grasse (PAM sans MG) en version sucre ou sans sucre et avec ou sans gélatine.

Dans les exemples suivants, les polyols ont été remplacés en totalité ou partie par de la pâte à mâcher. Des nouveaux assemblages sont possibles car l'absence de matière grasse permet de redéfinir les mélanges et ratio.

Le taux de gomme base n'est plus un facteur limitant. Cette liberté de formulation ouvre le champ des textures pour un chewing-gum.

### Exemple 3.1 : Chewing-gums avec pâtes à mâcher sans matière grasse et taux constant de gomme de base

Le témoin est une recette classique de chewing-gum sans sucre caractérisé par une dureté initiale forte et une longue durée d'hydratation.

Les formules sont données dans le tableau 3.1 ci-dessous.

L'essai 0 correspond à un mix de chewing-gum sans sucre et d'une pâte à mâcher sans sucre classique, c'est-à-dire contenant de la matière grasse et telle que réalisée dans le témoin de l'essai 1 ci-dessus.

Dans ce cas, la matière grasse de la pâte à mâcher, solvant des constituants de la gomme de base, a impacté la texture du produit. La mâche est très souple, collante avec perte d'élasticité. Le taux de gomme de base doit être élevé pour contrecarrer l'effet de la matière grasse. On l'aura compris, le taux d'incorporation de pâte à mâcher classique est limité.

Les essais 1 à 5 concernent des chewing-gums contenant la pâte à mâcher sans sucre et sans matière grasse définie comme essai 2 de l'exemple 1 ci-dessus, et dont le taux de gomme de base a été maintenu au taux standard, c'est-à-dire à 30% en poids de la totalité des ingrédients mis en œuvre.

L'essai 1 correspond à un remplacement très partiel de la phase cristalline.

L'essai 2 correspond au maintien du mannitol pour optimiser le passage machine et éviter le collant du mix.

L'essai 3 concerne un remplacement total de la phase cristalline.

L'essai 4 concerne un chewing-gum dans lequel des inclusions peuvent être introduites pour amener un effet visuel ou sensoriel. Dans ce cas le Maltitol P200 commercialisé par la Demanderesse amène un effet croustillant.

L'essai 5 concerne un chewing-gum avec des fibres.

Toutes les associations, inclusions, colorations,... déjà possibles sur un chewing-gum classique peuvent être maintenues et développées.

La gomme de base Solsona est commercialisée par la société CAFOSA en Espagne. La SolsonaT est une gomme de base avec talc pour produit sans sucre.

### Exemple 3.2 : Chewing-gums avec pâtes à mâcher sans matière grasse et taux variable de gomme de base

Cette série d'essais concerne des chewing gums avec des taux de gomme de base variables. En effet, nous allons démontrer que le taux de gomme de base n'est plus une contrainte. Il faut uniquement s'assurer de la cohésion en bouche et du volume minimum requis pour pouvoir mâcher la gomme de base.

Cette flexibilité introduit aussi de la flexibilité sur le taux et le support d'arôme utilisés.

La texture du produit est autant apportée par la gomme de base que par la pâte à mâcher selon la présente invention, en fonction du taux d'incorporation.

Les formules sont données dans le tableau 3.2 ci-dessous.

La pâte à mâcher utilisée pour ces différentes formulations est une pâte à mâcher sans sucre et sans matière grasse définie comme essai 2 de l'exemple 1 ci-dessus.

L'essai 6 montre un chewing-gum à faible taux de gomme de base (seulement 10% en poids de la totalité des ingrédients mis en œuvre) sans arôme liquide dans la partie gomme de base.

L'essai 7 est également un chewing gum possédant un taux réduit de gomme de base (15%) mais avec une part cristalline de polyols. Le taux d'arôme liquide a été diminué.

L'essai 8 correspond à un chewing gum contenant une quantité importante de pâte à mâcher mais avec un taux de gomme de base correspondant à un chewing-gum au sucre, c'est-à-dire 20%.

### Exemple 3.3 : Chewing-gums avec pâtes à mâcher sans matière grasse et format libre

Cet exemple concerne l'utilisation d'une pâte à mâcher selon l'invention en association avec les composés traditionnellement utilisés dans la fabrication de chewing gums, tout en jouant sur les formats des confiseries obtenues.

Comme les produits avec ou sans gomme de base ont des texture proches, cela permet de créer des chewing-gums multidimensionnels beaucoup plus facilement (Multicouche, fourrage PAM/CG ou CG/PAM, torsade....

Le produit torsade par exemple enroule deux boudins pour former un produit twisté.

L'essai 9 montre un produit à deux couches 50% chewing-gum et 50% PAM.

L'essai 10 montre un produit chewing-gum avec 30% de PAM.

Il n'y a pas de limitation dans la composition, le mix, le positionnement des couches...

Les formules sont données dans le tableau 3.3 ci-dessous.

La pâte à mâcher utilisée pour ces différentes formulations est une pâte à mâcher sans sucre et sans matière grasse définie comme essai 2 de l'exemple 1 ci-dessus.

### Exemple 3.4 : Procédé de préparation des différents chewing-gums

La préparation des différents mélanges se fait dans un malaxeur bras en Z.

La double enveloppe du pétrin est portée à 45 °C.

La gomme de base est introduite dans le malaxeur avec une partie de la pâte à mâcher.

Les arômes liquides sont introduit puis le reste de la pâte à mâcher, et enfin les poudres (polyols, arômes poudres, acides,...)

L'arrêt du mixeur se fait lorsque le mélange est homogène.

La température du mélange ne dépasse pas 50 °C.

Cette phase est comparable à la fabrication traditionnelle de chewing-gum. Elle peut être réalisée en mode discontinu ou continu dans des mixeurs ou co-malaxeur.

La mise en forme dépend de la texture de la pâte et du format choisi (laminage ou extrusion).

Le mélange chewing-gum / pâte à mâcher permet de produire des chewing-gums sur des lignes de formage pâte à mâcher. En effet, la texture finale du produit est proche de celle d'une pâte à mâcher et le produit peut être emballé dans les mêmes formats que des pâtes à mâcher.

### Exemple 3.5 : Dégustation

Tous les différents chewing gums selon l'invention ont été dégustés et notés par un jury entrainé.

Ils ont tous été jugés comme très satisfaisants et de qualité au moins identique à celle des chewing gums témoins.

Les confiseries de l'exemple 3.3 ont quant à elles été très bien accueillies par le jury de dégustateurs. Bien qu'il s'agisse de confiseries nouvelles à la fois en termes de texture mais aussi de forme, leur dégustation a été très positive.

Tous les exemples présentés ci-dessus démontrent qu'il est parfaitement possible de :
- substituer une partie voire la totalité de la phase cristalline dans une recette de chewing gums,
- substituer une partie de la gomme de base dans une recette de chewing gums,
- Créer des nouvelles textures en combinant une recette de chewing-gum avec la pâte à mâcher sans matière grasse de l'invention.

La substitution d'une partie de la phase cristalline et/ou de la gomme de base n'interfère pas sur les qualités du produit fini.

En effet, des mesures de perte en eau et également de reprise en eau en conditions humides ou sèches ont montré que les chewing-gums contenant de la pâte à mâcher selon l'invention étaient tout aussi stables, voire plus stables qu'un chewing-gum traditionnel de l'art antérieur contenant une phase cristalline sorbitol.

**TABLEAU 3.1 : Chewing-gums avec pâtes à mâcher sans matière grasse selon l'invention avec un taux de gomme de base constant**

| **EXEMPLE 3.1** | **Témoin chewing-gum sans sucre** | **Essai 0** | **Essai 1** | **Essai 2** | **Essai 3** | **Essai 4** | **Essai 5** |
|---|---|---|---|---|---|---|---|
| **Composition (g)** | **100** | **100** | **100** | **100** | **100** | **100** | **100** |
| Gomme de base (Solsona) | 30 | 30 | 30 | 30 | 30 | 30 | 30 |
| Sorbitol NEOSORB® P60W | 45,5 | 38,55 | 35 | | | | |
| Mannitol 60 | 10 | | | 10 | | 10 | 10 |
| Maltitol P200 | | | | | | 10 | |
| Nutriose® FB06 | | | | | | | 20 |
| Sirop de maltitol de type LYCASIN® 85/55 | 6 | | | | | | |
| Glycérine | 2 | | | | | | |
| Emulsifiant: lécithine de tournesol liquide | 0,05 | | | | | | |
| Sucralose | 0,2 | 0,2 | 0,2 | 0,2 | 0,2 | 0,2 | 0,2 |
| Acide citrique, | 0,8 | 0,8 | 0,8 | 0,8 | 0,8 | 0,8 | 0,8 |
| Acide citrique enrobé 4000TP | 0,8 | 0,8 | 0,8 | 0,8 | | 0,8 | 0,8 |
| Arôme menthol crystal commercialisé par Mane | 0,05 | 0,05 | 0,05 | 0,05 | 0,05 | 0,05 | 0,05 |
| Physcool synergy M-0059829 Mane | 0,2 | 0,2 | 0,2 | 0,2 | | 0,2 | 0,2 |
| Arôme citron liquide M-0057478 Mane | 1,2 | 1,2 | 1,2 | 1,2 | 0,8 | 1,2 | 1,2 |
| Flavour N-capture SD M-057492 Mane | 1,5 | 1,5 | 1,5 | 1,5 | 1,5 | 1,5 | 1,5 |
| Flavour Powercaps 1000 E-1406208 Mane | 1,5 | 1,5 | 1,5 | 1,5 | | 1,5 | 1,5 |
| Colorant | 0,2 | 0,2 | 0,2 | 0,2 | 0,2 | 0,2 | 0,2 |
| **PAM sans sucre avec MG (témoin exemple 1)** | | **25** | | | | | |
| **PAM sans sucre et sans MG (essai 2 de l'exemple 1)** | | | **28,55** | **53,55** | **66,45** | **43,55** | **33,55** |
| | | | | | | | |
| % Pâte à mâcher | 0 | 25 | 28,55 | 53,55 | 66,45 | 43,55 | 33,55 |
| % d'eau dans le produit fini | 0,9 | 1,75 | 2 | 3,75 | 4,65 | 3,05 | 2,35 |

| | | | | | | | |
|---|---|---|---|---|---|---|---|
| Physcool synergy M-0059829 Mane : il s'agit d'un agent rafraichissant liquide commercialisé par la société Mane. Flavour N-capture SD M-057492 Mane : Il s'agit d'un arôme poudre spray dry base gomme arabique commercialisé par la société Mane. Flavour Powercaps 1000 E-1406208 Mane : Il s'agit de capsules de gélatine d'arôme commercialisé par la société Mane. | | | | | | | |

**TABLEAU 3.2 : Chewing-gums avec pâtes à mâcher sans matière grasse selon l'invention avec un taux de gomme de base variable**

| **EXEMPLE 3.2** | **Témoin chewing-gum sans sucre** | **Essai 6** | **Essai 7** | **Essai 8** |
|---|---|---|---|---|
| **Composition (g)** | **100** | **100** | **100** | **100** |
| Gomme de base (Solsona) | 30 | 10 | 15 | 20 |
| NEOSORB® P60W sorbitol | 45,38 | | | |
| Mannitol 60 | 10 | | 15 | 6,5 |
| Sirop de maltitol de type LYCASIN® 85/55 | 6 | | | |
| Glycérine | 2 | | | |
| Acesulfame K | 0,12 | 0,12 | 0,12 | 0,12 |
| Sucralose | 0,15 | 0,15 | 0,15 | 0,15 |
| Acide citrique, | 0,8 | | 0,8 | 0,8 |
| Acide citrique enrobé 4000TP | 0,8 | | 0,8 | |
| Arôme menthol crystal commercialisé par Mane | 0,05 | | 0,05 | |
| Physcool synergy M-0059829 Mane | 0,3 | | 0,3 | 0,3 |
| Arôme FRAISE E-1406206 Mane | 1,2 | | 0,6 | 0,8 |
| Flavour Powergran GL M-0059849 Mane | 1,5 | 1,5 | 1,5 | 1 |
| Flavour N-capture SD-E 1402207 Mane | 1,5 | 1,5 | 1,5 | |
| Colorant | 0,2 | 0,2 | 0,2 | 0,2 |
| **PAM sans sucre et sans MG (essai 2 de l'exemple 1)** | | **86,53** | **63,98** | **70,13** |
| **% d'eau dans le produit fini** | 0,9 | **6,06** | **4,48** | **4,91** |

**TABLEAU 3.3 : Chewing-gums avec pâtes à mâcher sans matière grasse selon l'invention et format libre**

| **EXEMPLE 3.3** | **Témoin chewing-gum sans sucre** | **Essai 9** | **Essai 10** |
|---|---|---|---|
| **Composition (g)** | **100** | **100** | **100** |
| Gomme de base (Solsona) | 30 | 15 | 21 |
| Sorbitol NEOSORB® P60W | 45,5 | 22,75 | 31,85 |
| Mannitol 60 | 10 | 5 | 7 |
| Sirop de maltitol de type LYCASIN® 85/55 | 6 | 3 | 4,2 |
| Glycérine | 2 | 1 | 1,4 |
| Emulsifiant: lécithine de tournesol liquide | 0,05 | 0,025 | 0,035 |
| Sucralose | 0,2 | 0,1 | 0,14 |
| Acide citrique, | 0,8 | 0,4 | 0,56 |
| Acide citrique enrobé 4000TP | 0,8 | 0,4 | 0,56 |
| Arôme menthol crystal commercialisé par Mane | 0,05 | 0,025 | 0,035 |
| Physcool synergy M-0059829 Mane | 0,2 | 0,1 | 0,14 |
| Arôme citron liquide M-0057478 Mane | 1,2 | 0,6 | 0,84 |
| Flavour N-capture SD M-057492 Mane | 1,5 | 0,75 | 1,05 |
| Flavour Powercaps 1000 E-1406208 Mane | 1,5 | 0,75 | 1,05 |
| Colorant | 0,2 | 0,1 | 0,14 |
| **PAM sans sucre et sans MG (essai 2 de l'exemple 1)** | | 50 | 30 |

## Revendications

1. Pâte à mâcher présentant une teneur en matière grasse inférieure à 3 %, le pourcentage étant exprimé en poids par rapport au poids total de la pâte à mâcher, **caractérisée en ce qu'**elle comprend un mélange entre un hydrolysat d'amidon non-fibreux et une fibre végétale, ledit hydrolysat d'amidon non-fibreux étant une maltodextrine.

2. Pâte à mâcher selon la revendication 1, **caractérisée en ce qu'**elle comprend de 0,1% à 25% d'une maltodextrine, de préférence de 2% à 10%, plus préférentiellement de 3% à 8%, les pourcentages étant exprimés en poids par rapport au poids total de la pâte à mâcher.

3. Pâte à mâcher selon la revendication 1, **caractérisée en ce qu'**elle comprend de 0,1% à 50% d'une fibre végétale, de préférence de 1% à 10%, plus préférentiellement de 1% à 6%, les pourcentages étant exprimés en poids par rapport au poids total de la pâte à mâcher.

4. Pâte à mâcher selon l'une quelconque des revendications 1 à 3, **caractérisée en ce qu'**elle est exempte de gélatine.

5. Pâte à mâcher selon l'une quelconque des revendications 1 à 4, **caractérisée en ce qu'**elle est sans sucre.

6. Pâte à mâcher selon l'une quelconque des revendications 1 à 5, **caractérisée en ce que** la maltodextrine possède un DE inférieur à 10, et plus préférentiellement un DE inférieur à 5.

7. Pâte à mâcher selon la revendication 6, **caractérisée en ce que** la maltodextrine possède un DE égal à 2.

8. Pâte à mâcher selon l'une quelconque des revendications 1 à 7, **caractérisée en ce que** la fibre végétale est choisie parmi les fibres solubles, les fibres insolubles ou leurs mélanges.

9. Pâte à mâcher selon la revendication 8, **caractérisée en ce que** ladite fibre végétale insoluble est choisie parmi les amidons résistants, les fibres de céréales, les fibres de fruits, les fibres de légumes, les fibres de légumineuses ou leurs mélanges.

10. Pâte à mâcher selon la revendication 8, **caractérisée en ce que** ladite fibre végétale soluble est choisie parmi les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles ou les oligosaccharides solubles issus de plantes oléagineuses ou protéagineuses.

11. Pâte à mâcher selon la revendication 10, **caractérisée en ce que** la fibre végétale est une maltodextrine branchée.

12. Pâte à mâcher selon l'une quelconque des revendications 1 à 11, **caractérisée en ce qu'**elle contient en outre une gomme de base, en particulier de 5 % à 50% en poids de gomme de base.

13. Pâte à mâcher selon la revendication 12, **caractérisée en ce qu'**elle est dépourvue de polyols.

14. Utilisation d'un mélange entre un hydrolysat d'amidon non-fibreux et une fibre végétale comme substitut de matière grasse dans une pâte à mâcher, ledit hydrolysat d'amidon non-fibreux étant une maltodextrine.

15. Composition de chewing-gum contenant, les pourcentages étant indiqués en poids sec par rapport au poids total de ladite composition de chewing-gum :
- de 5% à 25%, préférentiellement de 7% à 22%, d'au moins une gomme de base,
- de 5 à 90%, préférentiellement de 20% à 80 %, et plus préférentiellement encore de 30 à 75% de la pâte à mâcher selon l'une quelconque des revendications 1 à 13,
- de 0,1 % à 8 %, préférentiellement de 0,1 % à 3 %, d'au moins un arôme.

16. Procédé de fabrication de la composition de chewing-gum selon la revendication 15, **caractérisé en ce qu'**il comprend les étapes suivantes :
- mélange la pâte à mâcher selon l'une quelconque des revendications 1 à 13 avec la gomme base,
- laminage ou extrusion du mélange,
- récupération des chewing-gums.

## Patentansprüche

1. Kaumasse mit einem Fettgehalt von weniger als 3 %, wobei der Gewichtsprozentsatz bezogen auf das Gesamtgewicht der Kaumasse ausgedrückt wird, **dadurch gekennzeichnet, dass** sie eine Mischung aus einem nicht-faserigen Stärkehydrolysat und einer Pflanzenfaser umfasst, wobei das nicht-faserige Stärkehydrolysat ein Maltodextrin ist.

2. Kaumasse nach Anspruch 1, **dadurch gekennzeichnet, dass** sie 0,1 % bis 25 %, bevorzugt 2 % bis 10 %, stärker bevorzugt 3 % bis 8 %, eines Maltodextrins umfasst, wobei die Prozentsätze in Gewichtsprozent, bezogen auf das Gesamtgewicht der Kaumasse, angegeben sind.

3. Kaumasse nach Anspruch 1, **dadurch gekennzeichnet, dass** sie 0,1 % bis 50 %, bevorzugt 1 % bis 10 %, stärker bevorzugt 1 % bis 6 %, einer Pflanzenfaser umfasst, wobei die Prozentsätze in Gewichtsprozenten, bezogen auf das Gesamtgewicht der Kaumasse, angegeben sind.

4. Kaumasse nach einem der Ansprüche 1 bis 3, **dadurch gekennzeichnet, dass** sie frei von Gelatine ist.

5. Kaumasse nach einem der Ansprüche 1 bis 4, **dadurch gekennzeichnet, dass** sie zuckerfrei ist.

6. Kaumasse nach einem der Ansprüche 1 bis 5, **dadurch gekennzeichnet, dass** das Maltodextrin ein DE kleiner 10 und stärker bevorzugt ein DE kleiner 5 aufweist.

7. Kaumasse nach Anspruch 6, **dadurch gekennzeichnet, dass** das Maltodextrin ein DE von 2 aufweist.

8. Kaumasse nach einem der Ansprüche 1 bis 7, **dadurch gekennzeichnet, dass** die Pflanzenfaser gewählt ist aus löslichen Fasern, unlöslichen Fasern oder Mischungen daraus.

9. Kaumasse nach Anspruch 8, **dadurch gekennzeichnet, dass** die unlösliche Pflanzenfaser gewählt ist aus resistenten Stärken, Getreidefasern, Fruchtfasern, Gemüsefasern, Hülsenfrüchtefasern oder Mischungen daraus.

10. Kaumasse nach Anspruch 8, **dadurch gekennzeichnet, dass** die lösliche Planzenfaser gewählt ist aus Fructanen, einschließlich Fructo-Oligosacchariden (FOS) und Inulin, Glucooligosacchariden (GOS), Isomalto-Oligosacchariden (IMOs), Trans-galakto-Oligosacchariden (TOS), Pyrodextrinen, Polydextrose, verzweigten Maltodextrinen, unverdaulichen Dextrinen oder löslichen Oligosacchariden aus Öl- oder Proteinpflanzen.

11. Kaumasse nach Anspruch 10, **dadurch gekennzeichnet, dass** die Pflanzenfaser ein verzweigtes Maltodextrin ist.

12. Kaumasse nach einem der Ansprüche 1 bis 11, **dadurch gekennzeichnet, dass** sie ferner ein Basisgummi, insbesondere 5 bis 50 Gew.-% Basisgummi, enthält.

13. Kaumasse nach Anspruch 12, **dadurch gekennzeichnet, dass** sie frei von Polyolen ist.

14. Verwendung einer Mischung aus einem nichtfaserigen Stärkehydrolysat und einer Pflanzenfaser als Fettersatz in einer Kaumasse, wobei das nichtfaserige Stärkehydrolysat ein Maltodextrin ist.

15. Kaugummizusammensetzung, welche umfasst:
- 5% bis 25%, bevorzugt 7% bis 22%, mindestens eines Basisgummis,
- 5 bis 90%, bevorzugt 20% bis 80%, und stärker bevorzugt 30 bis 75% der Kaumasse nach einem der Ansprüche 1 bis 13,
- 0,1% bis 8%, bevorzugt 0,1% bis 3%, wenigstens eines Aromas,
wobei die Prozentsätze als Trockengewicht bezogen auf das Gesamtgewicht der Kaugummizusammensetzung angegeben sind.

16. Verfahren zur Herstellung der Kaugummizusammensetzung nach Anspruch 15, **dadurch gekennzeichnet, dass** es die folgenden Schritte umfasst:
- Mischen der Kaumasse nach einem der Ansprüche 1 bis 13 mit dem Basisgummi,
- Walzen oder Extrudieren der Mischung,
- Gewinnung der Kaugummis.

## Claims

1. A chewing paste having a fat content of less than 3%, the percentage being expressed by weight relative to the total weight of the chewing paste, **characterized in that** it comprises a mixture of a non-fibrous starch hydrolyzate and a plant fiber, said non-fibrous starch hydrolyzate being a maltodextrin.

2. The chewing paste as claimed in claim 1, **characterized in that** it comprises from 0.1% to 25% of a maltodextrin, preferably from 2% to 10%, more preferentially from 3% to 8%, the percentages being expressed by weight relative to the total weight of the chewing paste.

3. The chewing paste as claimed in claim 1, **characterized in that** it comprises from 0.1% to 50% of a plant fiber, preferably from 1% to 10%, more preferentially from 1% to 6%, the percentages being expressed by weight relative to the total weight of the chewing paste.

4. The chewing paste as claimed in any one of claims 1 to 3, **characterized in that** it does not contain gelatin.

5. The chewing paste as claimed in any one of claims 1 to 4, **characterized in that** it is sugar-free.

6. The chewing paste as claimed in any one of claims 1 to 5, **characterized in that** the maltodextrin has a DE of less than 10, and more preferentially a DE of less than 5.

7. The chewing paste as claimed in claim 6, **characterized in that** the maltodextrin has a DE equal to 2.

8. The chewing paste as claimed in any one of claims 1 to 7, **characterized in that** the plant fiber is chosen from soluble fibers, insoluble fibers, or mixtures thereof.

9. The chewing paste as claimed in claim 8, **characterized in that** said insoluble plant fiber is chosen from resistant starches, cereal fibers, fruit fibers, vegetable fibers, leguminous plant fibers, or mixtures thereof.

10. The chewing paste as claimed in claim 8, **characterized in that** said soluble plant fiber is chosen from fructans, including fructooligosaccharides (FOSs) and inulin, glucooligosaccharides (GOSs), isomaltooligosaccharides (IMOs), transgalactooligosaccharides (TOSs), pyrodextrins, polydextrose, branched maltodextrins, indigestible dextrins and soluble oligosaccharides derived from oleaginous plants or protein-producing plants.

11. The chewing paste as claimed in claim 10, **characterized in that** the plant fiber is a branched maltodextrin.

12. The chewing paste as claimed in any one of claims 1 to 11, **characterized in that** it also contains a gum base, in particular from 5% to 50% by weight of gum base.

13. The chewing paste as claimed in claim 12, **characterized in that** it does not contain polyols.

14. The use of a mixture of a non-fibrous starch hydrolyzate and a plant fiber as substitute for fat in a chewing paste, said non-fibrous starch hydrolyzate being a maltodextrin.

15. A chewing gum composition containing, with the percentages being given as dry weight relative to the total weight of said chewing gum composition:
- from 5% to 25%, preferentially from 7% to 22%, of at least one gum base,
- from 5% to 90%, preferentially from 20% to 80%, and even more preferentially from 30% to 75% of the chewing paste as claimed in any one of claims 1 to 13,
- from 0.1% to 8%, preferentially from 0.1% to 3%, of at least one flavor.

16. A process for manufacturing the chewing gum composition as claimed in claim 15, **characterized in that** it comprises the following steps:
- mixing the chewing paste as claimed in any one of claims 1 to 13 with the gum base,
- rolling or extruding the mixture,
- recovering the chewing gums.
